**Europäisches Patentamt**

**European Patent Office**

**Office européen des brevets**

(19)

(11) Veröffentlichungsnummer: **0 054 774**
**B1**

# (12) EUROPÄISCHE PATENTSCHRIFT

(45) Veröffentlichungstag der Patentschrift:
**20.03.85**

(21) Anmeldenummer: **81110072.6**

(22) Anmeldetag: **02.12.81**

(51) Int. Cl.⁴: **B 23 B 31/12**

(54) **Spannfutter.**

(30) Priorität: **20.12.80 DE 3048274**

(43) Veröffentlichungstag der Anmeldung:
**30.06.82 Patentblatt 82/26**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**DE - C - 903 397**
**FR - A - 1 198 531**
**US - A - 2 479 973**

(73) Patentinhaber: **Zettl, Otto, jun., Fellenbergstrasse 9,
D-8961 Reicholzried (DE)**

(72) Erfinder: **Zettl, Otto, jun., Fellenbergstrasse 9,
D-8961 Reicholzried (DE)**

(74) Vertreter: **Hübner, Hans-Jürgen, Dipl.-Ing.,
Mozartstrasse 21, D-8960 Kempten Allgäu (DE)**

EP 0 054 774 B1

## Beschreibung

Die Erfindung betrifft ein Spannfutter zum Festspannen eines Werkzeuges, wie Bohrer oder Fräser vor dem anschliessenden Einsetzen der aus Spannfutter und Werkzeug bestehenden Einheit in Präzisionsbohr-, -fräsmaschinen u. dergl., mit einem hohlen länglichen, einen Spannfutterkopf mit Innenkegel aufweisenden Gehäuse und einem im Gehäuse angeordneten und von der Gehäuserückseite oder vom Gehäuseumfang her durch Einführen eines Betätigungswerkzeuges verschraubbaren Stellglied, an dessen Vorderende mehrere Spannbacken undrehbar und radial verschiebbar angeordnet sind, wobei das Gehäuse mindestens zweiteilig ausgebildet ist, aus einer Kopfhülse und einem mit dieser lösbar verbundenen Befestigungskörper besteht und das Stellglied ebenfalls zweiteilig ausgebildet ist und aus einem im wesentlichen unverschiebbaren und mit einem Drehwerkzeug kuppelbaren Drehkörper und einem mit diesem in Schraubeingriff stehenden undrehbaren, axial beweglichen Schiebeglied besteht.

Aus der FR-A 1 198 531 ist ein Spannfutter dieser Gattung bekannt, das jedoch ausschliesslich vom Gehäuseumfang her mittels eines Einsteckschlüssels betätigt werden kann. Der Gehäuse-Befestigungskörper weist einen hinteren Schraubansatz auf, mit dem das Spannfutter in die Antriebswelle z.B. einer Bohrmaschine eingeschraubt werden kann. In einer Ausführung weist der Schraubansatz eine längsgenutete Bohrung auf, die durch ein Führungsglied zur Drehverhinderung des Schiebegliedes geschlossen ist. In einer zweiten Ausführung ist der Schraubstutzen massiv und das Schiebeglied weist am Aussenumfang radiale Fortsätze auf, die in Längsnuten des Befestigungskörpers eingreifen. Die Spannbacken bilden zusammen mit einem Gummiringkörper eine Baueinheit. Separate Führungseinrichtungen für die Spannbacken fehlen. Die Genauigkeit der Zentrierung des Bohrers im Spannfutter ist begrenzt. Das Bohrfutter ist nicht für Rechts- und Linkslauf geeignet, weil in einer Drehrichtung der eingespannte Bohrer über die Spannbacken die Kopfhülse verschrauben und das Spannfutter damit öffnen kann.

Aufgabe der Erfindung ist es, ein neues Spannfutter zu schaffen, das eine hochgenaue Zentrierung des Werkzeuges im Spannfutter gewährleistet, das für Rechts- und Linkslauf geeignet ist und das eine einfache Spannmöglichkeit unter Anwendung grosser Spannkräfte erlaubt.

Diese Aufgabe wird erfindungsgemäss dadurch gelöst, dass in der Kopfhülse ein am Befestigungskörper befestigter Käfig angeordnet ist, in welchem die Spannbacken geführt sind, dass in der vorderen Stirnfläche des Schiebegliedes in gleichen Umfangsabständen Radialnuten angeordnet sind, in die die Spannbacken eingreifen und dass der Befestigungskörper als Steckhülse mit einer offenen durchgehenden Bohrung ausgebildet ist.

Der Käfig für die Spannbacken sorgt für deren genaue Führung in radialer wie auch in axialer Richtung. Dank der Befestigung des Käfigs an der Steckhülse können die Spannbacken das vom Bohrer ausgeübte Drehmoment nicht auf die Kopfhülse übertragen, da dieses Drehmoment vom Käfig aufgenommen und auf die Steckhülse übertragen wird. Die Kopfhülse ist entlastet und kann sich nicht unbeabsichtigt abschrauben. Die Rückwand des Drehkörpers liegt der durchgehenden Bohrung der Steckhülse gegenüber, so dass es leicht möglich ist, ggf. über eine Kraftübersetzungseinrichtung ein Betätigungswerkzeug von der Rückseite des Spannfutters her einzuführen und mit dem Drehkörper zu kuppeln. Auf diese Weise lassen sich sehr hohe Spannkräfte erzielen, die ein sicheres Festspannen des Bohrers gewährleisten. Zu diesem Zweck ist eine Ausgestaltung der Erfindung vorgesehen, bei der der Drehkörper eine rückseitige, koaxiale Mehrkantausbildung zum Einstecken eines Betätigungswerkzeuges aufweist.

Eine Weiterbildung der Erfindung besteht darin, dass der Drehkörper einen Aussenbund aufweist, der in einer Gehäuseausnehmung aufgenommen ist, die rückseitig von einer Ringschulter der Steckhülse und vorderseitig vom Käfig begrenzt wird. Dadurch wird eine einfache Axialsicherung des Drehkörpers ohne Verwendung von Sprengringen u. dergl. geschaffen, die auch eine leichte Demontage erlaubt.

Der Aussenbund des Drehkörpers kann gemäss einer Weiterbildung der Erfindung am Aussenumfang eine Schneckenradverzahnung aufweisen und die Steckhülse kann mit einer entsprechenden Tangentialbohrung versehen sein, deren Achse tangential zum Verzahnungsteilkreis verläuft, wobei in die Tangentialbohrung eine Antriebswelle eingesetzt sein kann, die eine Antriebsschnecke aufweist und an deren einer Stirnfläche eine Betätigungsmehrkant o. dergl. ausgebildet ist, so dass auch ein Spannen des Werkzeuges vom Gehäuseumfang her möglich ist. Diese Ausführung ist insbesondere bei sehr kleinen Bohrfuttern von Vorteil, bei denen der Befestigungskörper als massiver Schaft ausgebildet sein muss. Bei grösseren Bauarten ist mit diesem Merkmal eine doppelte Spannmöglichkeit gegeben. Ausserdem ermöglicht die Erfindung eine rationelle Serienfertigung beider Spannfutterarten, da die Grundbauteile des Spannfutters dieselben sind.

Die Zeichnung veranschaulicht zwei Ausführungsbeispiele.

Fig. 1 zeigt einen Längsschnitt durch ein Spannfutter und

Fig. 2 einen Längsschnitt durch eine abgewandelte Ausführungsform eines Spannfutters.

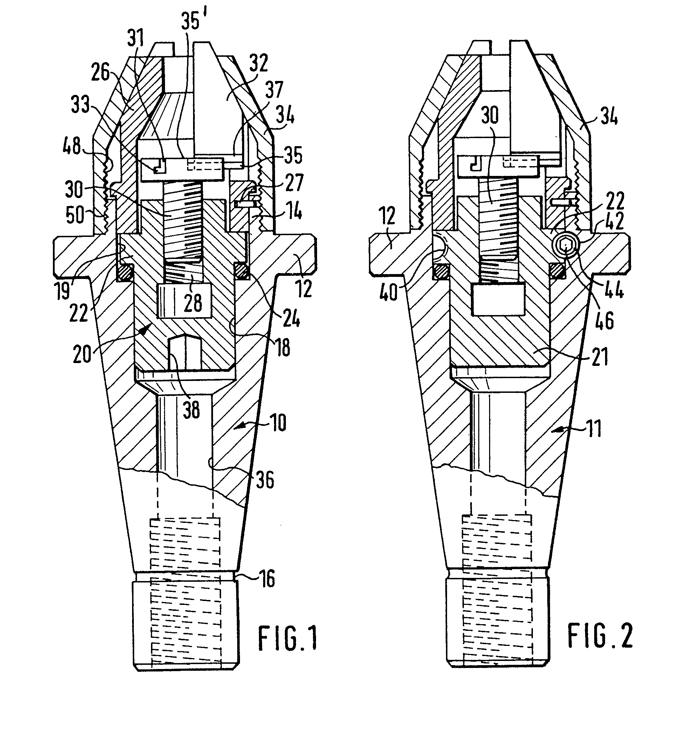

Eine Steckhülse 10 mit Aussenflansch 12 und vorderem Schraubansatz 14 bildet einen Teil des Spannfuttergehäuses. Die Aussenkontur dieser Steckhülse wird von der jeweiligen Bohr-, Fräs- oder Drehmaschine bestimmt. Die Steckhülse 10 wird bis zum Flansch 12 in die Maschine eingeschoben. Für Maschinen mit zylindrischer Schaftaufnahme ist die Aussenfläche in Abwandlung von Fig. 1 entsprechend zylindrisch. Sowohl der Flansch 12 als auch eine im hinteren Bereich der Hülse 10 vorgesehene Umfangsnut 16 dienen dem Festspannen der Steckhülse 10 in der Maschine.

Die Steckhülse 10 hat eine erste Bohrung 19 von grossem Durchmesser, eine anschliessende Bohrung 18 von mittlerem Durchmesser und eine daran anschliessende Bohrung 36 mit kleinerem Durchmesser, die bis an das hintere Ende der Hülse reicht. In den Bohrungen 18, 19 ist ein Drehkörper 20 drehbar eingesetzt, der einen Aussenbund 22 aufweist, welcher zusammen mit einem Axialkugellager 24 in der grösseren Bohrung 19 aufgenommen ist, wobei sich das Axialkugellager 24 an der zwischen den Bohrungen 18, 19 gebildeten Ringschulter abstützt. Ein Käfig 26, der im vorderen Teil konisch und im hinteren Teil zylindrisch ist, ist in den Ringraum zwischen dem Vorderteil des Drehkörpers 20 und der Innenbohrung 19 im Bereich des Schraubenansatzes 14 eingesetzt. Die hintere Stirnfläche des Käfigs 26 bildet einen Anschlag für die vordere Stirnfläche des Aussenbundes 22 des Drehkörpers. Dieser Drehkörper ist damit axial im wesentlichen unverschiebbar gehalten. Im zylindrischen Mantel des Käfigs 26 und im Schraubansatz 14 befinden sich miteinander fluchtende Radialbohrungen, in die ein Passtift 27 von aussen eingesetzt ist. Der Käfig 26 ist damit an der Steckhülse 10 drehfest.

Der Käfig 26 weist in gleichen Umfangsabständen Axialschlitze auf, in denen jeweils eine Spannbacke 32 axial und radial verschiebbar geführt ist. Im Ausführungsbeispiel sind drei Spannbacken 32 vorgesehen. Jede Spannbacke ist ein plattenförmiges Element mit einer achsparallelen Innenfläche, einer schrägen Aussenfläche, deren Schräge mit der Konizität der Aussenfläche des Käfigs 26 übereinstimmt und mit einem von dem Hinterrand rechtwinklig abstehenden Haltesteg 35.

Der Drehkörper 20 hat im vorderen Bereich eine Gewindebohrung 28, in welchem ein Schiebeglied 30 mit seinem hinteren Schraubbolzen eingreift. Am Vorderende hat das Schiebeglied 30, eine Scheibe die im zylindrischen Hohlraum des Käfigs 26 verschiebbar aufgenommen ist. In der Stirnfläche dieser Scheibe des Schiebegliedes 30 ist für jede Spannbacke 32 eine stirnseitige Winkelnut vorgesehen, in deren axialem Schenkel 31 ein Basissteg 37 der Spannbacke 32 eingreift und in deren seitlichem Schenkel 33 der abgewinkelte Haltesteg 35 der Spannbacke aufgenommen ist. Der mittlere Bereich 35' der Stirnfläche der Scheibe dient als axiale Abstützung für das Werkzeug. Die Spannbacken 32 werden über nicht weiter dargestellte Federn in üblicher Weise nach aussen vorgespannt.

Nachdem die Axialschenkel 31 mit den Axialschlitzen des Käfigs 26 ausgerichtet sind, werden die Spannbacken 32 von aussen eingeschoben, wonach eine Kopfhülse 34 auf den Ansatz 14 der Steckhülse 10 aufgeschraubt wird. Die Kopfhülse besteht im vorderen Teil aus einem Kegelmantel und dem hinteren Teil aus einem Zylindermantel. Die Innenfläche des Kegelmantels stimmt mit der Konizität der Aussenfläche des Käfigs 26 und mit der Aussenschräge der Spannbacken 32 überein. Der zylindrische Teil der Kopfhülse 34 hat ein Innengewinde 48, das genau auf das Aussengewinde 50 des Ansatzes 14 passt. Die Kopfhülse 34 wird bis zum Anschlag an der Steckhülse 10 aufgeschraubt und festgezogen. Eine weitere Befestigung ist nicht erforderlich. Kopfhülse 34 und Steckhülse 10 bilden damit ein starres Gehäuse.

Der Drehkörper 20 hat in seinem hinteren Bereich eine Mehrkantöffnung 38, in die durch die Bohrung 36 hindurch ein Spannschlüssel eingesetzt werden kann, um den Drehkörper zu drehen, wodurch das Schiebeglied 30 mit den Spannbacken 32 axial verschoben und das Werkzeug gespannt wird.

Fig. 2 zeigt eine etwas abgewandelte Ausführungsform. Der Aussenbund 22 des Drehkörpers 21 ist mit einer Schneckenradverzahnung 40 versehen. Dafür entfällt die Mehrkantöffnung 38. Die Steckhülse 11 weist eine Tangentialbohrung 42 auf, deren Achse den Teilkreis der Schneckenradverzahnung 40 berührt. In die Bohrung 42 ist eine Schneckenwelle 44 eingesetzt, deren Schnecke mit der Schneckenradverzahnung 40 in Antriebseingriff steht. Die Schneckenwelle 44 hat eine stirnseitige Mehrkantöffnung 46, so dass mittels eines von aussen eingeführten Steckschlüssels der Drehkörper 21 gedreht und das Werkzeug in der schon beschriebenen Weise festgespannt werden kann. Die Kopfhülse 34 und die übrigen Teile, wie das Schiebeglied 30 bleiben unverändert.

**Patentansprüche**

1. Spannfutter zum Festspannen eines Werkzeuges, wie Bohrer oder Fräser vor dem anschliessenden Einsetzen der aus Spannfutter und Werkzeug bestehenden Einheit in Präzisionsbohr-, -fräsmaschinen u. dergl., mit einem hohlen länglichen, einen Spannfutterkopf mit Innenkegel aufweisenden Gehäuse (10, 11; 34) und einem im Gehäuse (10, 11; 34) angeordneten und von der Gehäuserückseite oder vom Gehäuseumfang her durch Einführen eines Betätigungswerkzeuges verschraubbaren Stellglied (20, 30) an dessen Vorderende mehrere Spannbacken (32) undrehbar und radial verschiebbar angeordnet sind, wobei das Gehäuse (10, 11; 34) mindestens zweiteilig ausgebildet ist, aus einer Kopfhülse (34) und einem mit dieser lösbar verbundenen Befestigungskörper (10; 11) besteht und das Stellglied (20, 30) ebenfalls zweiteilig ausgebildet ist und aus einem im wesentlichen unverschiebbaren und mit einem Drehwerkzeug kuppelbaren Drehkörper (20) und einem mit diesem in Schraubeingriff stehenden undrehbaren, axial beweglichen Schiebeglied (30) besteht, dadurch gekennzeichnet, dass in der Kopfhülse (34) ein am Befestigungskörper (10; 11) befestigter Käfig (26) angeordnet ist, in welchem die Spannbacken (32) geführt sind, dass in der vorderen Stirnfläche des Schiebegliedes (30) in gleichen Umfangsabständen Radialnuten (31) angeordnet sind, in die die Spannbacken (32) eingereifen und dass der Befestigungskörper als Steckhülse (10; 11) mit einer offenen durchgehenden Bohrung (36) ausgebildet ist.

2. Spannfutter nach Anspruch 1, dadurch gekennzeichnet, dass der Drehkörper (20) eine rückseitige koaxiale Mehrkantausbildung (38) zum Einstecken eines Betätigungswerkzeuges aufweist.

3. Spannfutter nach Anspruch 1 oder 2, dadurch gekennzeichnet, dass der Drehkörper (30) einen Aussenbund (22) aufweist, der in einer Gehäuseausnehmung aufgenommen ist, die rückseitig von einer Ringschulter der Steckhülse (10) und vorderseitig vom Käfig (26) begrenzt wird.

4. Spannfutter nach Anspruch 3, dadurch gekennzeichnet, dass zwischen dem Aussenbund (22) des Drehkörpers (20) und der Ringschulter der Steckhülse (10) ein Axiallager (24) angeordnet ist.

5. Spannfutter nach Anspruch 1, dadurch gekennzeichnet, dass die Radialnuten (31) im Querschnitt L-förmig mit einem seitlichen Nutschenkel (33) ausgebildet sind und die Spannbacken je einen abgewinkelten Haltesteg (35) aufweisen, der in dem Nutschenkel (33) eingreift.

6. Spannfutter nach Anspruch 3 oder 4, dadurch gekenzeichnet, dass der Aussenbund (22) des Drehkörpers am Aussenumfang eine Schneckenradverzahnung (40) aufweist und die Steckhülse (11) eine Tangentialbohrung (42) aufweist, deren Achse tangential zum Verzahnungsteilkreis verläuft und dass in der Tangentialbohrung (42) eine Antriebswelle (44) eingesetzt ist, die eine Antriebsschnecke aufweist und an deren einer Stirnfläche ein Betätigungsmehrkant (46) ausgebildet ist.

## Claims

1. A chuck for tight-clamping a tool as a drill or a milling cutter before the subsequent inserting of a unit consisting of the chuck and the tool into precision drill machines, milling machines and the like, comprising a hollow elongate housing (10, 11; 34) provided with an inside cone and an adjusting member (20, 30) arranged within the housing (10, 11; 34) and screwable by inserting an operating tool from the backside or the periphery of the housing, a plurality of clamping jaws (32) non-rotably and radially displaceably arranged at the front end of the adjusting member, the housing (10, 11, 34) formed of at least a two part construction of a head sleeve (34) and a fastening body (10; 11) detachably connected therewith and the adjusting member (20, 30) also formed of a two part construction consisting of a substantially non-displaceable rotating body (20) engaging with a rotating tool and a non-rotable axially movable slide member (30) being in screw engagement with the rotating body (20) characterized in that a cage (26) is arranged at the fastening body (10; 11) within the head sleeve (34), the clamping jaws (32) guided in the cage (26), that radial grooves (31) are arranged in the front end of the slide member (30) with equal interspaces, the clamping jaws (32) engaging into the radial grooves (31), and that the fastening body is formed as a plug-in sleeve (10; 11) having an open throughgoing bore (36).

2. A chuck according to claim 1, characterized in that the rotating body (20) is provided with a back-sided coaxial polygonal formation (38) for insertion of a operating tool.

3. A chuck according to claim 1 or 2, characterized in that the rotating body (30) is provided with an outside collar (22) supported in a recess of the housing, the recess limited by a ring shoulder of the plug-in sleeve (10) at the backside and by the cage (26) at the front side.

4. A chuck according to claim 3, characterized in that an axial bearing (24) is arranged between the outside collar (22) of the rotating body (20) and the ring shoulder of the plug-in sleeve (10).

5. A chuck according to claim 1, characterized in that the radial grooves (31) are formed as being L-shaped in cross-section having a lateral leg (33) and the clamping jaws have an angular holding flange (35) engaging into the groove leg (33).

6. A chuck according to claim 3 or 4, characterized in that the outside collar (22) of the rotating body has a worm wheel toothing (40) at its outside periphery and the plug-in sleeve (11) has a tangential bore (42) the axis of which running tangentially with respect to the pitch circle of the toothing and that a driving shaft (44) is inserted in the tangential bore (42), the driving shaft (44) having a drive worm and an operation polygon (46) is formed at one front face of the driving shaft (44).

## Revendications

1. Mandrin de serrage pour la fixation d'un outil tel que foret ou fraise avant l'engagement de l'ensemble formé du mandrin de l'outil, dans des machines à forer ou à fraiser de précision ou des machines analogues, comportant un corps creux allongé (10, 11; 34) présentant une tête à cône intérieur, et un élément de manœuvre (20, 30) placé dans le corps (10, 11; 34) et pouvant être vissé depuis l'arrière ou le pourtour du corps par introduction d'un outil de manœuvre, à l'extrémité avant duquel sont placés, non tournants, mais mobiles radialement, plusieurs mors (32), le corps (10, 11; 34) étant en au moins deux parties, une douille de tête (34) et un corps de fixation (10; 11) joint de façon amovible à cette dernière, et l'élément de manœuvre (20, 30) étant également en deux parties, un corps de révolution (20) pratiquement fixe axialement et pouvant être accouplé à un outil de rotation et un élément coulissant (30) non tournant mais mobile axialement vissé à ce dernier, caractérisé en ce que dans la douille de tête (34) est placée une cage (26) fixée au corps de fixation (10; 11) dans laquelle sont guidés les mors (32), que dans la face frontale avant de l'élément coulissant (30) sont pratiquées, à des intervalles circonférentiels égaux, des rainures radiales (31) dans lesquelles sont engagés les mors (32) et que le corps de fixation est constitué d'une douille (10; 11) pourvue d'un alésage traversant ouvert (36).

2. Mandrin de serrage selon la revendication 1, caractérisé en ce que le corps de révolution (20) présente une forme arrière polygonale coaxiale (38) pour l'engagement d'un outil de manœuvre.

3. Mandrin de serrage selon l'une des revendications 1 ou 2, caractérisé en ce que le corps de révolution (30) présente un collet extérieur (22) qui est logé dans un évidement du corps qui est limité du côté arrière par un épaulement annulaire de la douille (10) et du côté avant par la cage (26).

4. Mandrin de serrage selon la revendication 3, caractérisé en ce qu'entre le collet extérieur (22) du corps de révolution (20) et l'épaulement annulaire de la douille (10) est placé un palier de butée (24).

5. Mandrin de serrage selon la revendication 1, caractérisé en ce que les rainures radiales (31), à section en L, ont une branche latérale (33) et les mors présentent chacun une nervure de maintien à angle droit (35) qui est engagée dans cette branche (33).

6. Mandrin de serrage selon l'une des revendications 3 et 4, caractérisé en ce que le collet extérieur (22) du corps de révolution présente à sa périphérie une denture de roue hélicoïdale (40) et la douille (11) présente un alésage tangentiel (42) dont l'axe est tangent au cercle primitif de la denture et que dans cet alésage tangentiel (42) est engagé un arbre d'entraînement (44) qui présente une vis sans fin d'entraînement et sur une face frontale duquel est fait un polygone de manœuvre (46).

FIG.1

FIG.2